# EUROPÄISCHE PATENTSCHRIFT

(11) **EP 2 094 552 B1**
(45) Veröffentlichungstag und Bekanntmachung des Hinweises auf die Patenterteilung: **28.07.2010**
(21) Anmeldenummer: 07822177.7
(22) Anmeldetag: 05.11.2007
(51) Int. Cl.: B60W 10/02, F16H 61/04

(54) **VERFAHREN ZUR DURCHFÜHRUNG EINES GANGWECHSELS EINES AUTOMATISIERTEN SCHALTGETRIEBES**
METHOD FOR CARRYING OUT A SHIFT OF GEARS OF AN AUTOMATIC TRANSMISSION
PROCÉDÉ DE RÉALISATION D'UN CHANGEMENT DE VITESSE D'UNE BOÎTE DE VITESSES AUTOMATIQUE

(30) Priorität: 17.11.2006 DE 102006054277
(43) Veröffentlichungstag der Anmeldung: 02.09.2009
(73) Patentinhaber: ZF Friedrichshafen AG, 88038 Friedrichshafen (DE)
(72) Erfinder: DOEBELE, Bernd, 88682 Salem (DE); WIENCEK, Norbert, 88709 Hagnau (DE)
(86) Internationale Anmeldenummer: PCT/EP2007/061848
(87) Internationale Veröffentlichungsnummer: WO 2008/058860

(56) Entgegenhaltungen:
- EP-A- 0 427 000
- EP-A- 1 316 463
- WO-A-2004/037590
- WO-A-2006/053670
- US-A1- 2001 011 484

## Beschreibung

Die Erfindung betrifft ein Verfahren zur Durchführung eines Gangwechsels eines automatisierten Schaltgetriebes eines Fahrzeuges bei Fahrt mit oder ohne Inanspruchnahme einer Trennkupplung gemäß dem Oberbegriff des Patentanspruchs 1.

Automatisierte Schaltgetriebe werden seit geraumer Zeit in unterschiedlichen Kraftfahrzeugtypen genutzt. Sie weisen eine Mehrzahl fester Übersetzungsverhältnisse auf, die durch eine Wahlvorgabe eines Fahrers und/oder einer Getriebesteuerungseinrichtung in den Drehmomentenfluss zwischen einem Antriebsmotor und angetriebenen Rädern eines Fahrzeugs schaltbar sind. Zwischen dem Antriebsmotor des Fahrzeugs und dem automatisierten Schaltgetriebe ist eine Trennkupplung bzw. Fahrkupplung angeordnet, die beispielsweise das Einlegen eines Fahrganges bei laufendem Antriebsmotor und stehendem Fahrzeug erlaubt. Diese Trennkupplung ist oft ebenfalls automatisiert betätigbar und ermöglicht so vollautomatisierte bzw. halbautomatisierte Schaltvorgänge.

Automatisierte Schaltgetriebe können als synchronisierte Getriebe ausgelegt sein. Bei dieser Bauform wird über besondere Getriebeelemente sichergestellt, dass sich bei einem Einlegen eines Ganges die beteiligten formschlüssig zusammenwirkenden Elemente des Getriebes ohne bzw. nur mit einer geringen, oft erwünschten Differenzgeschwindigkeit bewegen. Die Synchronisation wird bei dieser Bauform über Reibkupplungen innerhalb des Getriebes sichergestellt.

Allerdings ist eine im Getriebe selbst angeordnete Synchronisationsvorrichtung aufgrund der Mehrzahl unterschiedlicher Reibpaarungen für verschiedene Übersetzungsstufen des Getriebes mit prinzipiellen Nachteilen in Bezug auf durch die zusätzlichen Elemente verursachten Kosten, dem benötigten zusätzlichen Bauraum, das durch die zusätzlichen Elemente bedingte größere Gewicht und nicht zuletzt in Bezug auf die nach Möglichkeit wartungsfreie Lebensdauer des Getriebes verbunden. Da Reibkupplungen einem nicht vernachlässigbarem Verschleiß unterliegen, müssen diese zumindest bei Fahrzeugen mit hohen Laufleistungen bzw. häufigen Schaltvorgängen nach einer bestimmten Nutzungszeit ausgetauscht werden, welches aufgrund ihrer Lage im Getriebe zu erheblichen Kosten und einem durch den Werkstattaufenthalt bedingten Ausfall des Fahrzeugs führt.

Insbesondere bei Fahrzeugtypen, die typischer Weise gewerblich genutzt werden und hohe jährliche Laufleistungen und/oder eine besonders große Anzahl von Schaltvorgängen aufweisen, bieten unsynchronisierte Getriebe daher Vorteile. Diese sind meist als Klauengetriebe ausgebildet, bei denen die jeweils in den Momentenfluss zwischen Antriebsmotor und angetriebenen Rädern geschaltete Übersetzungsstufe durch eine Bewegung eines formschlüssigen Elements festgelegt wird. Zumeist sind bei diesem Getriebetyp die Zahnräder einer Welle drehfest auf dieser angeordnet, während mit diesen kämmende Zahnräder zumindest einer anderen Welle als so genannte Losräder axial festgelegt, aber radial drehbar auf der Welle gelagert sind. Diese Losräder sind durch Schaltklauen drehfest auf ihrer Welle festlegbar, wodurch ein Momentenfluss von einem auf einer ersten Welle angeordneten Festrad über ein mittels Schaltklaue auf einer zweiten Welle festgelegten Losrad ermöglicht wird.

Die Schaltung der Schaltklauen ist nur dann mit einer vertretbaren Bauteilbelastung und ohne bzw. mit nur einer geringen Geräuschentwicklung möglich, wenn das auf seiner Welle jeweils festzulegende Losrad und die zugehörige Welle zumindest weitgehend dieselbe Drehzahl aufweisen. Da die Drehzahl der Getriebeabtriebswelle durch die Fahrgeschwindigkeit des Fahrzeugs und die zwischen den angetriebenen Rädern sowie der Getriebeeingangswelle befindlichen, im Allgemeinen festen Übersetzungen bestimmt ist, muss für einen Gangwechsel eines unsynchronisierten Schaltgetriebes bei fahrendem Fahrzeug die Drehzahl der Getriebeantriebswelle so eingestellt werden, dass sie zumindest weitgehend der Drehzahl entspricht, die sich nach dem Schlieβen der Klauenkupplung ergibt.

Hierfür kann in erster Linie der Antriebsmotor mit einfachen Mitteln bei einem sich in Neutralstellung befindlichen Getriebe und geöffneter Trennkupplung so angesteuert oder hinsichtlich seiner Motordrehzahl geregelt werden, dass der Antriebsmotor je nach gewünschter Beschleunigung oder Abbremsung der Getriebeeingangswelle lediglich auf eine höhere oder niedrigere Drehzahl als die zur Synchronisation des Getriebes benötigte Drehzahl eingestellt wird. Wird nun die Trennkupplung langsam geschlossen, so wird die Antriebswelle des Getriebes entsprechend beschleunigt oder verzögert. Sobald die Abweichung von der gewünschten Synchrondrehzahl ausreichend gering ist, spuren die formschlüssigen Elemente zur Festlegung der Losräder ein und der gewünschte Gang ist geschaltet.

Diese Methode hat den Vorteil, dass sie aufgrund des in der Trennkupplung möglichen großen Schlupfes auch bei sehr großen Drehzahlunterschieden zwischen der Abtriebsdrehzahl des Antriebsmotors und der tatsächlichen bzw. gewünschten Drehzahl der Getriebeantriebswelle problemlos funktioniert.

Allerdings ist gerade bei häufigen Schaltvorgängen und bei Fahrzeugen mit erheblichem Gewicht der dadurch bedingte Verschleiß an der Trennkupplung nicht vernachlässigbar und führt wiederum zu Kosten für den Austausch der Reibbeläge sowie zu durch den hierfür notwendigen Werkstattaufenthalt bedingten Ausfallkosten des Fahrzeugs. Außerdem werden neben den Reibbelägen der Kupplung auch die zugeordneten Aktuatoren und Ausrücklager beansprucht sowie ebenfalls einem Verschleiß unterworfen.

Vor diesem Hintergrund gibt es bereits Konzepte, ein unsynchronisiertes Schaltgetriebe während der Fahrt des Fahrzeugs bei geschlossener Trennkupplung zu schalten. Hierfür ist es notwendig, bei durch die Fahrtgeschwindigkeit des Fahrzeugs gegebener Drehzahl der Getriebeabtriebswelle die Drehzahl der Getriebeantriebswelle bzw. der über die geschlossene Trennkupplung mit dieser drehfest verbundenen Abtriebswelle des Antriebsmotors relativ genau auf die für die Synchronisation benötigte Drehzahl einzustellen.

Dies erfordert, sofern diese Synchronisation mittels Motordrehzahl innerhalb einer vertretbaren Zeitspanne erfolgen soll, eine vergleichsweise aufwendige und genaue Motorsteuerung. Die sich einstellende Drehzahl ist dabei zunächst von der an den Kolben des Antriebsmotors anliegenden Leistung abhängig, die ihrerseits von so vielfältigen Faktoren wie der Kraftstoffeinspritzmenge, dem Kraftstoff-Luft-Verhältnis, dem Zündwinkel sowie individuellen und auch innerhalb einer Motorenbaureihe unterschiedlichen Motoreigenschaften sowie weiteren Faktoren abhängig.

Für eine Ermittlung der zum Antrieb der Eingangswelle des Schaltgetriebes zur Verfügung stehenden Motorleistung ist die an den Kolben anliegende Motorleistung dann um beispielsweise interne Reibungsverluste zu verringern, die ihrerseits nicht nur vom jeweiligen Verschleißgrad der Komponenten des Antriebsmotors und des Getriebes abhängig sind, sondern sich auch kurzfristig, z.B. mit der Temperatur und damit Viskosität des Getriebe- und Motoröls, ändern.

Weiter ist zu berücksichtigen, dass die Einstellung der Synchrongeschwindigkeit bei ausgelegtem Gang, also in der Neutral-Stellung des Getriebes vorgenommen wird. Aufgrund des in diesem Betriebszustand sehr steilen Verlaufes einer Leistungs-Drehzahl-Kurve des Antriebsmotors führen schon kleine Veränderungen der Antriebsleistung oder der Antriebsleistung entgegenwirkenden Schleppmomente zu erheblichen Drehzahlunterschieden, weshalb beispielsweise eine Veränderung der Leistungsabnahme einer Lichtmaschine oder einer Klimaanlage kurzfristig spürbare Rückwirkungen auf den sich einstellenden Drehzahlverlauf haben können. Dieser antriebsmotorseitige Regelungsbereich wird dennoch in vielen Fällen zufriedenstellend von einer Motorsteuerung beherrscht.

Weiter handelt es sich bei der Einstellung einer Synchrondrehzahl um einen hochdynamischen Vorgang, bei dem die Massenträgheit der abzubremsenden oder zu beschleunigenden Massen ebenfalls eine nicht zu vernachlässigende Rolle spielt. Während die zu beschleunigenden oder abzubremsenden Massen jedoch relativ genau bekannt sind und sich im Allgemeinen nur langsam, beispielsweise mit zunehmendem Verschleiß der Trennkupplungsbeläge ändern, ist weiter zu beachten, dass sich die Synchronisationsdrehzahl während des Schaltvorgangs ebenfalls getriebeeingangsseitig ändern kann. Sobald die Zugkraft des Motors nicht mehr an die angetriebenen Räder weitergeleitet werden kann, weil im Schaltgetriebe der zuvor eingelegten Gang ausgelegt ist und sich das Schaltgetriebe damit in der Neutral-Stellung befindet, verändert sich die Geschwindigkeit des Fahrzeugs nach Maßgabe der angreifenden Kräfte, die beispielsweise von der Steigung der Aufstandsfläche des Fahrzeugs und dem Fahrzeuggewicht, dem durch Fahrzeugkomponenten und Fahrbahnrauhigkeit bedingten Rollwiderstand, dem Luftwiderstand und der Geschwindigkeit sowie Richtung der anströmenden Luft und weiteren Faktoren abhängt. Dieser Bereich entzieht sich naturgemäß der Regelungsfähigkeit der Steuerung des Antriebsmotors und muss daher getrennt erfasst sowie als momentan bzw. in naher Zukunft benötigte Synchrondrehzahl an die Motorsteuerung übermittelt werden.

Für die Entscheidung, ob ein Gangwechsel ohne eine Öffnung der Trennkupplung durchgeführt werden soll und für die ausreichend genaue Einstellung einer Synchrondrehzahl ist letztlich immer das Zusammenspiel dieser und weiterer Einflussfaktoren abzuschätzen. Dabei ist zu bedenken, dass die durch einen Schaltvorgang ohne Öffnung der Trennkupplung erzielbaren Vorteile gerade wesentlich auf einer Verringerung des Verschleißes beruhen.

Zwar genügt es im einfachsten Fall, die gewünschte Synchrondrehzahl der Getriebeantriebswelle mit Hilfe der messtechnisch recht einfach zu ermittelnden Drehzahl der Getriebeabtriebswelle und der durch den Zielgang bekannten Übersetzung zu ermitteln sowie mittels einer Regelschleife die Abtriebswelle des Antriebsmotors durch eine Leistungsänderung desselben in die gewünschte Richtung zu beeinflussen. Ein derartiges Vorgehen führt jedoch gerade bei stark schwankenden Betriebsbedingungen des Fahrzeugs oft zu unverhältnismäßig langen Schaltzeiten oder zu unerwünscht ungenau eingestellten Synchrondrehzahlen.

Schließlich ist zu beachten, dass es Schaltvorgänge gibt, welche nicht oder jedenfalls nicht vorteilhaft ohne eine Öffnung der Trennkupplung zu bewerkstelligen sind. Hierzu zählen nicht nur Anfahrvorgänge, sondern z.B. auch Schaltvorgänge, welche beispielsweise eine Drehzahl des Antriebsmotors unterhalb der normalen Leerlaufdrehzahl oder sogar unterhalb der möglichen Leerlaufdrehzahl erfordern würden. Ein derartiger Schaltvorgang kann beispielsweise erwünscht sein, wenn sich ein Fahrzeug bergabwärts bewegt und der Fahrer eine nur sehr geringfügige Wirkung der Motorbremse wünscht oder in Erwartung einer Beschleunigung des Fahrzeugs an der schiefen Ebenen einen Gang wählen möchte, der zwar kurzzeitig einen Motorbetrieb an oder unterhalb der unteren Drehzahlgrenze zur Folge hat, aber aufgrund der Fahrzeugbeschleunigung innerhalb von wenigen Sekunden ein angemessener Fahrgang sein wird.

Aus der gattungsbildenden DE 102 49 951 A1 ist bereits ein Verfahren zur Steuerung eines Antriebsstranges bekannt, bei welchem ein Gangwechsel ohne Öffnung der Trennkupplung mit Hilfe der Berücksichtigung einer Vielzahl unterschiedlicher Einflussfaktoren ermöglicht wird. Hierfür wird bei jedem Gangwechsel eine Entscheidung getroffen, ob der Gangwechsel mit geschlossener oder geöffneter Kupplung vorgenommen werden soll. Sofern eine Prüfung ergibt, dass ein Gangwechsel mit geschlossener Kupplung möglich ist, wird der Gangwechsel auch mit geschlossener Kupplung durchgeführt.

Hierfür wird vorgeschlagen, die Auswahl und/oder die Prüfung der Gangwechsel-Betriebsart in Abhängigkeit von einer Vielzahl von Fahrzeugparametern und Betriebsgrößen durchzuführen. Es wird betont, dass die Gefahr, dass die Auswahl der Gangwechsel-Betriebsart zu einem falschen Ergebnis kommt, bei diesem Verfahren besonders gering ist. Dies wird einerseits durch einen extrem komplizierten und sowohl in Hinblick auf die benötigte Rechenleistung eines elektronischen Getriebesteuerungsgerätes als auch auf die notwendigen Sensoren aufwendigen Verfahrensablauf erreicht, und andererseits dadurch, dass ein Gangwechsel bei geschlossener Kupplung nur dann durchgeführt wird, wenn das Ermittlungsverfahren mit hoher Zuverlässigkeit eine problemlose Durchführbarkeit vorhersagt.

Beispielsweise wird gemäß der Grundvariante des in der DE 102 49 951 A1 vorgestellten Verfahrens dann auf eine Schaltung bei geschlossner Kupplung verzichtet, wenn eine beteiligte Komponente oder deren Sensoren fehlerhaft arbeiten sollten. Aufgrund der ausgesprochen hohen Zahl der zu berücksichtigenden Faktoren und Komponenten bedeutet dies in der Praxis eine erhebliche Einschränkung der durchschnittlichen Verfügbarkeit des Systems. Weiter sollen nach dem Erststart des Fahrzeugs und nach einem Neustart zunächst sehr restriktive Regeln für die Freigabe eines Schaltvorgangs bei geschlossener Kupplung gelten, um so die Unsicherheit bezüglich noch nicht ausreichend genau bekannter aktueller und kritischer Einflussparameter auszugleichen.

Die Sicherheit vor einem fälschlich freigegebenen Schaltvorgang bei geschlossener Kupplung wird im Wesentlichen dadurch erhöht, dass bei Feststellung auch kleiner Unsicherheiten bezüglich der Durchführbarkeit auf einen Schaltmodus mit geöffneter Kupplung umgeschaltet wird. Die Vorteile eines Schaltens bei geschlossener Kupplung können somit in vielen Fällen, in denen sie in der Praxis nutzbar wären, aus den in diesem bekannten Verfahren berücksichtigten Gründen nicht realisiert werden. Wichtig ist dabei, dass die Entscheidung über den Modus des Gangwechsels (bei geöffneter Kupplung beziehungsweise bei geschlossener Kupplung) stets vor der eigentlichen Einleitung des Schaltvorganges getroffen wird.

Dennoch ist das vorgestellte Verfahren in zumindest einigen Fällen nicht in der Lage, die beanspruchte Sicherheit der Schaltmodusentscheidung zu gewährleisten. So soll etwa der gerade bei Güterverkehrsfahrzeugen alltägliche sehr starke Wechsel der Zuladung und damit des Fahrzeuggesamtgewichtes dadurch berücksichtigt werden, dass nach einem Neustart des Antriebsmotors zunächst auf ein Schalten bei geschlossner Kupplung verzichtet wird, bis die wesentlichen Einflussfaktoren, wie beispielsweise das Fahrzeuggesamtgewicht, ausreichend genau ermittelt oder abgeschätzt wurden. Nun ist jedoch ein Abschalten des Fahrzeugmotors nicht zwingend für eine wesentliche Änderung der Beladung notwendig und insbesondere bei z.B. Baustellenfahrzeugen wie Kipplastern und Betonmischerfahrzeugen, bei bestimmten Tanklastfahrzeugen aber auch bei Personenbeförderungsfahrzeugen, wie etwa Schul- und Reisebussen, eher die Ausnahme als die Regel.

Um die geschilderten Nachteile des in der DE 102 49 951 A1 vorgestellten Verfahrens wenigstens teilweise zu beheben, wird in Verbesserung dieses Verfahrens gemäß der Erfindung vorgeschlagen, die Anforderungen für eine Freigabe eines Schaltvorgangs bei geschlossener Kupplung zunächst weniger streng zu gestalten und dafür bei getroffener Entscheidung für einen Gangwechsel bei geschlossener Kupplung zusätzlich den Teilschritt des Auslegens des zuvor eingelegten Ganges zur Überprüfung der Richtigkeit der Entscheidung heranzuziehen.

Konkret wird davon ausgegangen, dass bei einer getroffenen Fehlentscheidung über den Modus des Gangwechsels das Getriebe nicht derart weitgehend drehmomentenfrei gestellt werden kann, dass ein Auslegen des jeweils eingelegten Ganges mit geringer Schaltkraft innerhalb einer vorbestimmten Zeit möglich ist.

Es wird daher bei einer getroffenen Entscheidung für einen Gangwechsel bei geschlossener Kupplung eine Zeitbegrenzung für das Auslegen des jeweils eingelegten Ganges eingeführt, bei deren Überschreitung davon ausgegangen wird, dass die notwendigen Voraussetzungen für den Vorgang des Einlegens des Zielgangs bei geschlossener Kupplung nicht erfüllt sind. In diesem Fall wird der Schaltvorgang abgebrochen und dann erneut im Schaltmodus mit geöffneter Kupplung begonnen bzw. auf diesen Modus umgeschaltet.

Dieser Weiterentwicklung des bekannten Verfahrens kommt damit die Bedeutung eines zu einem relativ späteren Zeitpunkt wirksamen Notabbruchs des bereits eingeleiteten Verfahrens zu. Dabei ist jedoch zu bedenken, dass die Anforderungen an die Genauigkeit der Motorsteuerung für das Auslegen eines Ganges erheblich niedriger sind, als für das erfolgreiche Einlegen eines Ganges. Ein erfolgreiches Auslegen eines Ganges kann daher nicht als sicheres Anzeichen dafür gewertet werden, dass auch das nachfolgend Einlegen eines Ganges bei geschlossener Kupplung erfolgreich sein wird bzw. wünschenswert ist.

Weiter unterscheiden sich die Anforderungen für einen Schaltvorgang mit geschlossener Kupplung jeweils auch von Gang zu Gang und beispielsweise in Abhängigkeit von der Fahrgeschwindigkeit sowie der Zuladung und weiteren Betriebsgrößen des Kraftfahrzeugs und von dessen Umwelt. Dies soll gemäß der DE 102 49 951 A1 dadurch berücksichtigt werden, dass die Schwellzeit zum Abbruch eines versuchten Gangwechsels bei geschlossener Kupplung in Abhängigkeit von derartigen Parametern variiert wird, was wiederum die Komplexität des Verfahrens erhöht und damit entweder dessen Anfälligkeit für Fehlentscheidungen erhöht oder den benötigten Sicherheitsspielraum zu einem gerade noch vorteilhaft durchführbaren Schaltvorgang bei geschlossener Kupplung erheblich vergrößert.

Vor diesem Hintergrund liegt der Erfindung die Aufgabe zugrunde, ein Verfahren für die Durchführung eines Gangwechsels eines automatisierten Schaltgetriebes eines Fahrzeuges bei Fahrt mit oder ohne Inanspruchnahme einer Trennkupplung vorzustellen, das gegenüber dem gattungsbildenden Verfahren eine höhere Zuverlässigkeit bei reduziertem Aufwand bietet, und auch bei einer Änderung des Fahrzeuggewichts bei laufendem Antriebsmotor zuverlässige Aussagen über die Vorteilhaftigkeit eines Gangwechsels bei geschlossener Trennkupplung - im Folgenden auch kurz als kupplungsloses Schalten bezeichnet - treffen kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die Zuverlässigkeit einer Entscheidung über die Vorteilhaftigkeit eines kupplungslosen Schaltens bei verringertem Aufwand erhöhen lässt, wenn die Entscheidung über den Schaltmodus, also ein kupplungsloses Gangeinlegen oder ein Gangeinlegen bei geöffneter Trennkupplung, zu einem späteren Zeitpunkt des Schaltablaufes getroffen wird. Insbesondere liegt der Erfindung die Erkenntnis zu Grunde, das die entscheidungsrelevante Gesamtwirkung einer Vielzahl von nach dem Stand der Technik nur schwer erfassbaren Einflussfaktoren mit einfachen Mitteln und erhöhter Sicherheit feststellbar ist, sobald sich das automatisierte Schaltgetriebe in seiner Neutralstellung mit ausgelegtem Gang befindet.

Letztlich kommt es für die Entscheidung über den anzuwendenden Schaltmodus, also über ein kupplungsloses Schalten bzw. Gangeinlegen oder ein Schalten bzw. Gangeinlegen bei geöffneter Trennkupplung nicht auf die Größe einzelner der genannten Faktoren an, sondern auf die sich aus der Summe der Faktoren ergebenden Wirkungen auf die schaltwesentlichen Drehzahlen, also insbesondere der Drehzahlen der durch eine formschlüssige Verbindung miteinander drehfest zu koppelnden Getriebeelemente.

Nach dem Auslegen des zuvor eingelegten Ganges kann durch eine einfache Sensierung der Drehzahl der Getriebeabtriebswelle - beziehungsweise einer mit dieser in einem ausreichend festen Verhältnis stehenden Größe wie etwa der Fahrgeschwindigkeit oder einer Drehzahl eines anderen mit dieser zwangsgekoppelten Getriebeelementes - und der zeitlichen Änderung dieser Drehzahl genau, sicher und kostengünstig ermittelt werden, ob und wie sich die Fahrgeschwindigkeit des Fahrzeugs und damit die Synchrondrehzahl ändert.

Es ist hierfür nicht wie nach im Stand der Technik vorgeschlagen notwendig, die Zuladung, die Steigung, die Fahrbahnrauigkeit und andere sich ändernde und oft nur mit erheblichem Aufwand und/oder ungenau zu erfassende Parameter im Einzelnen zu bestimmen sowie anschließend rechenaufwendig und fehleranfällig zu einem Gesamtwert zusammen zu setzen. Zudem ist es durch die unmittelbare Erfassung der Drehzahl und der zeitlichen Drehzahländerung der Getriebeabtriebswelle relativ einfach und genau möglich, deren zukünftigen Verlauf innerhalb einer für den Schaltvorgang benötigten Zeitspanne mit ausreichender Genauigkeit vorherzusagen.

Demnach geht die Erfindung aus von einem Wahlverfahren zur Durchführung eines Gangwechsels eines automatisierten Schaltgetriebes eines Fahrzeuges bei Fahrt mit oder ohne Inanspruchnahme einer Trennkupplung aus, wobei ein Antriebsstrang des Fahrzeugs eine Antriebsmaschine, ein automatisiertes Schaltgetriebe mit mehreren festen Übersetzungsverhältnissen, eine zwischen der Antriebsmaschine und dem automatisierten Schaltgetriebe angeordnete, automatisiert schaltbare Trennkupplung und eine Schaltsteuerungseinrichtung zur Steuerung eines Wechsels des Übersetzungsverhältnisses gemäß den Vorgaben eines Fahrers und/oder einer automatisierten Gangwahleinrichtung aufweist.

Dabei ist die Schaltsteuerungseinrichtung, die sowohl eine eigenständige Vorrichtung als auch ein Teil einer anderen Steuerungsvorrichtung als auch funktionell über mehrere, untereinander datentechnisch verbundene Steuerungsvorrichtungen sein kann, so ausgelegt, dass sie nach der Entscheidung einer Entscheidungseinheit - die ein integraler Bestandteil der Schaltsteuerungseinrichtung, eine eigenständige Vorrichtung oder ein Teil einer anderen Steuerungsvorrichtung sein kann, die mit der Schaltsteuerungseinrichtung datentechnisch verbunden ist - einen Wechsel des Übersetzungsverhältnisses des automatisierten Schaltgetriebes mit oder ohne eine Öffnung der Trennkupplung durchführen bzw. auslösen kann.

Zur Lösung der gestellten Aufgabe ist vorgesehen, dass die Entscheidungseinheit bei Vorliegen bestimmter, grundlegender Bedingungen ein Auslegen eines Ursprungsganges ohne Öffnung der Trennkupplung veranlasst und in der Folge Daten über die Größe und den Verlauf einer eng mit der Drehzahl einer Abtriebswelle des automatisierten Schaltgetriebes korrelierenden Größe einliest sowie zumindest unter Einbeziehung dieser Daten über den Schaltmodus für das Einlegen des Zielganges entscheidet.

Die erwähnten bestimmten, grundlegenden Bedingungen bedürfen hier einer genaueren Erläuterung: Sie sind so zu verstehen, dass die jeweils in der konkreten Ausgestaltung vorliegenden Daten ganz oder teilweise dahingehend ausgewertet werden, ob eine Durchführung des Schaltvorgangs bei geschlossener Schaltkupplung grundsätzlich mit einer durch den Fachmann jeweils festzulegenden bzw. abzuschätzenden Wahrscheinlichkeit durchführbar erscheint.

Dies ist so zu verstehen, dass in denjenigen Fällen, in denen die erfolgreiche Durchführung eines Wechsels des Ganges bei geschlossener Trennkupplung von vorneherein mit ausreichend hoher Wahrscheinlichkeit ausschließbar ist, eine Öffnung der Trennkupplung zu einem frühen Zeitpunkt angestrebt wird und eine ansonsten notwendige Überprüfung der Drehzahl und der Drehzahlveränderung der Getriebeabtriebswelle in diesem Fall zweckmäßig entweder unterbleiben kann, oder aber gegebenenfalls anhand anderer Auswertungskriterien erfolgen kann. Die vorgenannte ausreichend hohe Wahrscheinlichkeit ist dabei wiederum im Einzelfall durch den Fachmann getriebe- bzw. antriebstrangbezogen festzulegen.

Grundsätzlich wird es beispielsweise in denjenigen Fällen, in denen ausgehend von der momentanen Drehzahl der Getriebeeingangswelle (oder z.B. von der Fahrgeschwindigkeit in Kombination mit der bekannten Übersetzung des Ursprungsganges) einerseits und dem bekannten Zielgang andererseits als sicher erscheint, dass der Antriebsmotor die für einen kupplungslosen Schaltvorgang benötigte Drehzahl nicht oder nicht innerhalb einer gewünschten Zeitspanne oder nur mit unerwünschten Begleiterscheinungen erreichen kann, nicht wünschenswert sein, den Schaltvorgang zunächst bei geschlossener Trennkupplung zu beginnen.

Allerdings lässt es sich nur im jeweiligen konkreten Einzelfall genau festlegen, wo z.B. die untere Drehzahlgrenze des Antriebsmotors liegen soll. Auch ist es vom Einzelfall bzw. vom Antriebsstrang abhängig, ob hier etwa eine konstante Drehzahlgrenze berücksichtigt werden soll, oder ob die Entscheidungseinheit beispielsweise Zugriff auf weiter relevante Informationen, wie etwa die Motoröltemperatur, den momentanen elektrischen Leistungsbedarf des Systems oder den Betrieb einer Klimaanlage hat. In diesen Fällen wäre es sinnvoll, die untere Drehzahlgrenze unter Berücksichtigung dieser oder anderer bzw. weiterer Parameter dynamisch festzulegen.

Andererseits kann der Fachmann in Kenntnis der Erfindung jedoch z.B. auf Grund von Restriktionen in Bezug auf einen zur Verfügung stehenden Programmspeicher oder die Datenverarbeitungskapazität der Entscheidungseinheit auch entscheiden, dass er auf die Überprüfung der grundlegenden Bedingungen in der konkreten Ausgestaltung ganz oder teilweise verzichten will. Im Extremfall könnte für die Entscheidungseinheit die bestimmte, grundlegende Bedingung für ein Auslegen des Ursprungsganges ohne Öffnung der Trennkupplung daher auch lediglich in einer Überprüfung bestehen, ob das Fahrzeug steht bzw. ob zum Zeitpunkt der Schaltanforderung ein Gang eingelegt und die Trennkupplung geschlossen ist.

Wesentlich für das erfindungsgemäße Verfahren ist, dass die Entscheidungseinheit, zumindest sofern sie ein Auslegen eines Ursprungsganges ohne Öffnung der Trennkupplung veranlasst hat, in der Folge Daten über die Größe und den Verlauf einer eng mit der Drehzahl einer Abtriebswelle des automatisierten Schaltgetriebes korrelierenden Größe einliest und zumindest unter Einbeziehung dieser Daten über den Schaltmodus für das Einlegen des Zielganges entscheidet.

Dabei kann die eng mit der Drehzahl einer Abtriebswelle des automatisierten Schaltgetriebes korrelierenden Größe wie bereits erwähnt beispielsweise die Drehzahl eines Fahrzeugrades, die Fahrgeschwindigkeit des Fahrzeugs oder die Drehzahl eines anderen rotierenden Teils sein, dessen Geschwindigkeitsverhältnis in für den vorliegenden Zweck ausreichend genau bekanntem Maße mit der Drehgeschwindigkeit der Getriebeeingangswelle zusammenhängt.

Aus dieser Schlüsselgröße und ihrem zeitlichen Verlauf lässt sich mit einfachen und preiswerten Mitteln vorhersagen, welche Synchrondrehzahl der Eingangswelle des automatisierten Schaltgetriebes notwendig bzw. erwünscht ist, und welche Abweichung von dieser Drehzahl hier tolerierbar oder sogar willkommen ist.

Selbstverständlich ist es möglich, beliebige weitere Daten, wie etwa die in der DE 102 49 951 A1 genannten Fahrzeugparameter und Betriebsgrößen mit in die Entscheidung einzubeziehen, sofern dies in Bezug auf eine Kosten-Nutzen-Abwägung sinnvoll erscheint, und insbesondere dann, wenn diese Daten ohnehin über einen Fahrzeug-Datenbus zur Verfügung stehen.

Auf der Grundlage bzw. zumindest unter Einbeziehung dieser Daten entscheidet die Entscheidungseinheit über den Schaltmodus für das Einlegen des Zielganges. Die Entscheidung über den jeweils geeigneten Schaltmodus fällt damit zu einem im Vergleich zum Stand der Technik entscheidend späteren Zeitpunkt des Schaltprozesses und ermöglichst es auf überraschend einfache Weise, die entscheidungsrelevante Summe vieler nach dem Stand der Technik aufwendig und fehleranfällig zu erfassenden Einzelparameter mit einfachsten Mitteln zu erfassen und zutreffend zu bewerten.

Die Ergebnisqualität der Entscheidung liegt dabei schon bei Anwendung einfacher Entscheidungsmodelle absehbar deutlich über der des Verfahrens gemäß der DE 102 49 951 A1, da dieses mit vielfach vermittelter Wirkketten arbeitet. Dies soll nachfolgend an einem Beispiel verdeutlicht werden:

Während nach dem Stand der Technik etwa mit Hilfe von ermittelten GPS-Positionsdaten aus einer digitalen Straßenkarte Steigungsdaten der Fahrbahn und eine Bewegungsrichtung des Fahrzeugs ausgelesen werden, daraus unter Einbeziehung eines geschätzten oder ermittelten Fahrzeuggewichtes ein Steigungswiderstand ermittelt wird, dieser um einen gegebenenfalls ebenfalls in Abhängigkeit des Fahrzeuggewichtes ermittelten Rollwiderstand des Fahrzeugs und einen geschwindigkeitsabhängigen Luftwiderstand erhöht wird, und dennoch z.B. der Einfluss eines etwa herrschenden Rückenwindes und eines falsch eingestellten Reifendrucks vernachlässig wird, kommt das erfindungsgemäße Verfahren im Wesentlichen damit aus, die Antriebsmaschine von den angetriebenen Rädern zu trennen, indem der Ursprungsgang bei geschlossener Trennkupplung ausgelegt und das automatisierte Schaltgetriebe so in seine Neutral-Stellung geschaltet wird.

Anschließend beobachtet die Entscheidungseinheit gemäß dem erfindungsgemäßen Verfahren für z.B. etwa zweihundert Millisekunden oder auch länger, wie sich die Fahrgeschwindigkeit des Fahrzeugs bzw. die Drehzahl der Getriebeabtriebswelle zeitlich entwickelt. Dabei ist es für den vorliegenden Zweck völlig unerheblich, ob eine starke Verzögerung des Fahrzeugs nun auf eine hohe Zuladung und eine starke Steigung oder auf eine geringe Zuladung und starken Gegenwind zurückzuführen ist, und welchen Einfluss der Reifendruck sowie der Reibbeiwert der Fahrbahn ausüben.

Entscheidend ist lediglich die Erkenntnis, dass das Fahrzeug z.B. so schnell verzögert, dass der einzulegende Zielgang bei geschlossener Kupplung nicht vorteilhaft eingelegt werden kann, weil sich die Schaltzeit durch die notwendige starke Absenkung der Drehzahl der Motorabtriebswelle bei geschlossener Trennkupplung unerwünscht verlängern würde und sich der Schaltvorgang bei Öffnung der Trennkupplung z.B. durch Aktivierung einer internen oder externen, auf die Eingangswelle des automatisierten Schaltgetriebes wirksamen Bremse erheblich schneller abschießen ließe.

Im Rahmen des erfindungsgemäßen Verfahrens ist es möglich und sinnvoll, die verwendeten Eingangsdaten, vor allem die Drehzahlinformationen von der Getriebeeingangswelle zunächst aufzubereiten. Beispielsweise kann es sinnvoll sein, die Daten erst einige Millisekunden nach dem erfolgten Auslegen des Ursprungsganges zu verwenden, um die Effekte einer lastwechselbedingten elastischen Verformung zu verringern. Alternativ dazu können derartige Effekte auch mit unterschiedlichen statistischen oder mathematischen Methoden korrigiert werden.

In einer bevorzugten Ausführungsform der Erfindung ist vorgesehen, dass die Entscheidungseinrichtung und die Schaltsteuerungseinrichtung mit einem automatisierte Schaltgetriebe mit festen Übersetzungsstufen zusammenwirken, welches zur Schaltung unterschiedlicher Übersetzungsverhältnisse zumindest überwiegend formschlüssige Elemente bzw. Bauteile verwendet. Dies sind in erster Linie dem Fachmann hinlänglich gekannte Klauengetriebe. Obwohl sich das erfindungsgemäße Verfahren grundsätzlich auch vorteilhaft bei z.B. mittels Synchronringen reibschlüssig synchronisierten Schaltgetrieben anwenden lässt, da sich zumindest bei genauer Synchronisierung so die Lebensdauer der Synchronringe verlängern und zudem im Fall eines Versagens der getriebeeigenen Synchronisation eine Synchronisation von außen durchführen lässt, sind die Vorteile beim Einsatz von formschlüssige Elementen zum Schalten der Gänge besonders groß. Dies liegt daran, dass bei diesen ohnehin zumindest bei einer notwendigen Beschleunigung der Getriebeantriebswelle eine Synchronisation von außen durch Anheben der Motordrehzahl erfolgen muss, die durch das erfindungsgemäße Verfahren sowohl in Hinblick auf den Verschleiß der Trennkupplung als auch auf die Schaltqualität bei relativ geringem Aufwand deutlich verbessert werden kann.

Gemäß einer anderen Variante des Verfahrens kann vorgesehen sein, dass die Entscheidungseinheit bei Vorliegen der bestimmten, grundlegenden Bedingungen ein Auslegen eines Ursprungsganges ohne Öffnung der Trennkupplung veranlasst und im weiteren zeitlichen Verlauf überwacht, ob das Auslegen des Ursprungsganges innerhalb einer vorbestimmten Zeitspanne erfolgt. Für den Fall, dass die vorbestimmte Zeitspanne ohne das Auslegen des Ursprungsgangs überschritten wird, wird ein Wechsel des Schaltmodus zu einer Schaltung mit Öffnung der Trennkupplung veranlasst.

Eine derartige steuerungstechnische Sicherungsfunktion ist für sich genommen bereits aus dem Stand der Technik bekannt, sie wurde jedoch lediglich auf bestimmte Sonderfälle, nämlich den Beginn einer Rückschaltung bezogen. Vorteilhaft ist die Überwachung des erfolgreichen Auslegens des Ursprungsganges im Rahmen des erfindungsgemäßen Verfahrens erstens an einer wesentlich anderen Stelle im zeitlichen Ablauf des Verfahrens angeordnet, nämlich vor dem Treffen der Entscheidung über den anzuwendenden Schaltmodus. Dementsprechend hat diese Sicherungsfunktion auch eine gänzlich andere Aufgabe.

Während diese Sicherungsfunktion im Stand der Technik dazu verwendet wird, nach einer getroffenen Entscheidung für einen kupplungslosen Schaltvorgang im Falle einer Fehlentscheidung als Notfallstrategie einen Weiterbetrieb der Schaltung zu ermöglichen, beziehungsweise zu verhindern, dass die Getriebesteuerung zeitlich unbegrenzt auf das Gangauslegen wartet, wird diese Sicherungsfunktion beim erfindungsgemäßen Verfahren dazu verwendet, noch vor dem Treffen einer Entscheidung über den Modus des Gangwechsels gemäß vorstehend beschriebenem Verfahren eine frühzeitige Entscheidung für den Modus des Gangwechsels bei geöffneter Trennkupplung zu ermöglichen.

Obwohl diese Sicherungsfunktion natürlich auch hier die nachgeordnete Aufgabe erfüllt, ein "Hängenbleiben" des Verfahrensablaufes zu verhindern bzw. aufzulösen, kommt ihr hier außerdem die Bedeutung einer Abkürzung des Verfahrens zu, da sich eine Entscheidung über den anzuwendenden Schaltmodus auf dem üblichen Weg, nämlich mittels der Auswertung des Drehzahlverlaufes der Getriebeabtriebswelle in der Neutral-Stellung des Getriebes vermeiden lässt.

Obwohl der positive Effekt einer derartigen "Abkürzung" des Verfahrens bei einem Verfahren gemäß dem Stand der Technik aufgrund des dort ungleich stärker zu treibenden Aufwandes noch deutlich größer wäre, bietet diese Weiterbildung des erfindungsgemäßen Verfahrens dennoch die Möglichkeit, zu einem früheren Zeitpunkt eine sinnvolle Entscheidung über den Schaltmodus zu treffen und überflüssige Auswertungen zu vermeiden.

Nach einer weiteren Variante des Verfahrens ist vorgesehen, dass die Schaltsteuerungseinrichtung zu einem Zeitpunkt vor dem Treffen einer Entscheidung über den Schaltmodus damit beginnt, Aktuatoren der Trennkupplung in Richtung auf eine Offenstellung der Trennkupplung anzusteuern, wobei die Schaltsteuerungseinrichtung diese Ansteuerung vor einer Entscheidung über den Schaltmodus lediglich so weit durchführt, dass es an der Trennkupplung zu keinem Schlupf bzw. keinem in der Praxis oder in Hinblick auf den Verschleiß der Reibbeläge der Trennkupplung bedeutsamen Verschleiß kommt. Dabei ist es möglich, die Verstellbewegung der Trennkupplung bereits bei bzw. sogar vor Einleitung des Schaltvorganges zu beginnen. Dies erlaubt eine vergleichsweise langsame Verstellung der Aktuatoren und mindert so deren Verschleiß.

Dieses Vorgehen hat zur Folge, dass die Trennkupplung zum Zeitpunkt der Entscheidung über den Schaltmodus für den Fall, dass eine Schaltung bei geöffneter Trennkupplung erfolgen soll, bereits teilweise geöffnet bzw. entspannt ist, wodurch der nachfolgende Schaltvorgang bescheunigt werden kann. Es kann auch vorgesehen sein, dass die Trennkupplung soweit geöffnet wird, bis der bisherige Gang auslegbar ist.

Für den Fall, dass eine Entscheidung zugunsten eines Gangeinlegens bei geschlossener Kupplung getroffen wird, kann die Trennkupplung umgehend in ihre geschlossenen Ausgangsstellung zurückgestellt werden und somit die maximal möglichen Drehmomente übertragen.

Sofern die Schaltsteuerungseinrichtung die Geschwindigkeit der Bewegung der Kupplungsaktuatoren in Abhängigkeit von Grad der Lastrücknahme steuert, so ergibt sich für den Fall, dass die Lastrücknahme schnell erfolgt und daher eine Schaltung bei geschlossener Kupplung wahrscheinlich ist, eine gewünscht langsamere Stellbewegung der Trennkupplung, und in dem Fall, in welchem die Lastrücknahme langsam erfolgt und somit ein Schaltvorgang bei geöffneter Kupplung wahrscheinlich ist, eine relativ schnelle bzw. zu einem gegebenen Zeitpunkt weitergehende Öffnung bzw. Entspannung der Trennkupplung. Der nachfolgende Schaltvorgang kann daher besonders schnell durchgeführt werden.

Vorteilhaft kann die anfängliche Ansteuerung der Aktuatoren der Schaltkupplung auch unabhängig vom eigentlichen Programmablauf stattfinden und beispielsweise in ein eigenes Modul oder ein vorhandenes Kupplungssteuerungsmodul ausgelagert werden. Zudem ist es möglich, weitere Parameter für die Ansteuerung der Aktuatoren der Trennkupplung mit heranzuziehen, die ebenfalls eine Relevanz in Bezug auf die später zu treffende Entscheidung über den Schaltmodus besitzen.

Schließlich sein darauf hingewiesen, dass die Betätigungsstellung der Trennkupplung bei ausgelegtem bisherigen Gang und noch nicht eingelegtem Zielgang, also in der Neutral-Stellung des Getriebes, in Abhängigkeit von dem Vorzeichen und/oder dem Betrag der Differenz von Soll-Drehzahl und Ist-Drehzahl der Getriebeeingangswelle und/oder von dem betragsmäßigen Niveau der Getriebeeingangsdrehzahl im Zielgang und/oder vom Quotienten des Gradienten der Zieldrehzahl und dem Gradienten der Drehzahl der Abtriebswelle des Verbrennungsmotors und/oder von dem Fahrwiderstand abhängig gesteuert wird.

Die Erfindung lässt sich anhand eines Ausführungsbeispiels weiter erläutern. Dazu ist der Beschreibung eine Zeichnung beigefügt, die einen stark vereinfachten Ablaufplan des vorgestellten Verfahrens zeigt. Dieses Verfahren läuft als Programm in einem kombinierten, elektronischen Getriebe- und Kupplungssteuerungsgerät ab.

Ausgehend von einem Kraftfahrzeug mit einem Verbrennungsmotor als Antriebsmotor, einem unsynchronisierten mehrgängigen Klauengetriebe und einer zwischen Klauengetriebe und Verbrennungsmotor angeordneten, automatisiert schaltbaren Trennkupplung, das sich mit einer Fahrgeschwindigkeit von 30 km/h bewegt, sei angenommen, dass der Fahrer oder eine automatisierte Schaltvorgabeeinrichtung ein Signal abgibt, dass das Klauengetriebe aus dem eingelegten zweiten Gang in den dritten Gang geschaltet werden soll.

Dieser Stellbefehl wird von einer Schaltsteuerungseinrichtung mit integrierter Entscheidungseinheit aufgenommen, die daraufhin in einem vorbereitenden Schritt 1 zunächst auf der Grundlage der bekannten Fahrgeschwindigkeit und des Ursprungsgangs sowie des Zielganges eine ungefähre, vom Verbrennungsmotor einzustellende Synchrondrehzahl ermittelt, und beginnt, die Kupplungsaktuatoren langsam in Richtung auf eine Offenstellung der Trennkupplung zu verstellen.

Im dann folgenden Schritt 2 des Kerns des Verfahrensablaufs überprüft die Entscheidungseinheit das Vorliegen bestimmter grundlegender Bedingungen für einen Schaltmodus zum Einlegen des Zielganges bei geschlossener Kupplung. In diesem Beispiel erfolgt zunächst eine Abfrage, ob das Fahrzeug fährt und ob zu diesem Zeitpunkt ein Ursprungsgang eingelegt ist. Dies wird bejaht. Weiter wird überprüft, ob eine Schaltung über zwei oder mehr Gänge erfolgen soll. Dies ist nicht so. Wäre dies der Fall (Ausgang "NEIN"), so wäre aufgrund des erheblichen Drehzahlunterschiedes zwischen der einzustellenden Synchrondrehzahl und der momentanen Drehzahl des Verbrennungsmotors ein Schalten bei geschlossener Trennkupplung nicht vorteilhaft, und das Programm würde sofort eine Entscheidung für ein Gangschalten bei geöffneter Kupplung treffen sowie die restlichen Steuerungsaufgaben der Steuerungseinheit überlassen, welche die Kupplungsaktuatoren mit der für diesen Modus vorgesehenen Verstellgeschwindigkeit ansteuern und eine herkömmliche Schaltung mit Öffnung der Trennkupplung durchführen würde. Weitere Berechnungen könnten unterbleiben und der Programmablauf der Entscheidungseinheit könnte beendet werden (Verzweigung zum Aktionsrechteck unten in der Zeichnungsfigur). Da in dem hier beschriebenen Beispiel die grundlegenden Bedingungen erfüllt sind (Ausgang "JA"), geht das Programm über zu Schritt 3.

In Schritt 3 veranlasst die Schaltsteuerungseinrichtung ein Auslegen des dritten Ganges bei geschlossener Trennkupplung gemäß den üblichen und hinlänglich bekannten Vorgaben, also insbesondere bei Vorliegen einer ausreichenden, zwischenzeitlich z.B. durch eine Motorsteuerungseinrichtung veranlassten Lastrücknahme des Antriebsmotors.

Nebenbei bemerkt bezieht sich diese Lastrücknahme nicht nur auf Fälle, in denen der Antriebsmotor ein positives Drehmoment in das Klauengetriebe einleitet, sondern auch auf solche Betriebssituationen, in denen beispielsweise die Motorbremse verwendet und daher ein positives Drehmoment in den Verbrennungsmotor selbst eingeleitet wird. Ausschlaggebend ist hier zunächst nur ein ausreichend geringer Betrag des übertragenen Drehmomentes, da bei einem zu großen übertragenen Drehmoment das Auslegen des Ganges nicht möglich oder zumindest nicht wünschenswert wäre. Diese Abläufe sind dem Fachmann jedoch bekannt und bedürfen hier keiner weiteren Erläuterung.

Alternativ dazu kann ebenfalls in bekannter Weise ein Aktuator zum Auslegen des eingelegten dritten Ganges mit einer gewählten resultierenden Stellkraft angesteuert werden, um ein Gangauslegen zu erreichen, sobald das oben beschriebene Drehmoment ausreichend gering ist.

In Schritt 4 überprüft die Entscheidungseinheit, ob eine festgelegte konstante oder unter den gegebenen Umständen für angemessen erachtete Zeitspanne verstrichen ist, ohne dass es zu einem erfolgreichen Auslegen des dritten Ganges gekommen ist. Sollte dies der Fall sein, so ist dies ein eindeutiger Hinweis darauf, dass ein Einlegen des zweiten Ganges bei geschlossener Trennkupplung nicht mit der gewünschten Genauigkeit bzw. in der gewünschten Schaltzeit durchgeführt werden kann. In diesem Fall entscheidet die Entscheidungseinheit ebenfalls auf einen Schaltvorgang bei geöffneter Trennkupplung, beendet den Programmablauf über den Ausgang "NEIN" und überlässt der Schaltsteuerungseinrichtung die Steuerung des Schaltvorganges bei geöffneter Trennkupplung (Verzweigung zum Aktionsrechteck unten in der Zeichnungsfigur).

Vorausgesetzt, dass der dritte Gang mit der eingestellten Aktuatorkraft und innerhalb einer hierfür maximal vorgesehenen Zeitspanne ausgelegt werden kann (Ausgang "JA"), geht das Programm zu Schritt 5 über.

In diesem Schritt 5 überwacht die Entscheidungseinheit den Drehzahlverlauf der Drehzahl der Getriebeabtriebswelle, wobei sie in diesem Fall beispielhaft die ersten 15 Millisekunden unberücksichtigt lässt, da diese zu stark von entlastungsbedingten Drehbewegungen der Getriebeabtriebswelle geprägt sind. In den Nachfolgenden z.B. 300 Millisekunden oder auch bis zum Vorliegen ausreichend aussagekräftiger Daten, jedoch maximal für einen im Einzelfall festzulegenden maximalen Zeitraum von z.B. 500 Millisekunden, wertet die Entscheidungseinheit den Verlauf dieser Drehzahl der Getriebeabtriebswelle aus.

Nachfolgend sollen nun für das Treffen der Entscheidung über den zu wählenden Schaltmodus in Schritt 6 beispielhaft zwei Fälle betrachtet werden:

Im ersten Fall ermittelt die Entscheidungseinrichtung, dass das Fahrzeug stark verzögert. Dies könnte beispielsweise auf eine Straße mit starker Steigung, einen tiefsandigen Untergrund, starken Gegenwind bei geringer Beladung oder anderes zurückzuführen sein. Letztlich ist die Ursache für die Beschleunigung hier jedoch unerheblich, da die Entscheidungseinrichtung lediglich beurteilen muss, ob unter den gegebenen Umständen ein Schalten mit oder ohne Öffnen der Trennkupplung vorteilhafter ist. In diesem Fall liegt ein Hochschalten in einen höheren Gang vor. Daher ist die nach dem Einlegen des Zielganges am Verbrennungsmotor anliegende Drehzahl ohnehin erheblich niedriger als die Ausgangsdrehzahl. Weiter wird dieser Effekt hier dadurch verstärkt, dass der Übersetzungsunterschied zwischen dem zweiten und dem Dritten Gang im Verhältnis zu anderen Gangsprüngen relativ groß ist.

Da sich in diesem Beispiel gleichzeitig die Drehzahl der Getriebeabtriebswelle zunehmend verzögert, erkennt die Entscheidungseinheit, dass eine Nachführung des Verbrennungsmotors zu einer Synchrondrehzahl in diesem Fall eine unerwünscht lange Zeit in Anspruch nehmen würde. Dabei käme es zu einem Wettlauf zwischen der Verzögerung der Drehzahl des Verbrennungsmotors und der gleichzeitigen Verringerung der benötigten Synchrondrehzahl. Die Entscheidungseinheit gibt daher ein Signal an die Schaltsteuerungseinheit aus (Ausgang "NEIN"), dass der Schaltvorgang bei geöffneter Trennkupplung durchzuführen ist, da so mit Hilfe einer auf die Antriebswelle des Getriebes wirkenden Getriebebremse die Synchrondrehzahl erheblich schneller zu erreichen ist.

Alternativ dazu oder zusätzlich kann die Entscheidung in einem etwas aufwendigerem Entscheidungsverfahren auch berücksichtigen, dass die Motordrehzahl bei Erreichen einer Synchrondrehzahl bei geschlossener Trennkupplung voraussichtlich so niedrig wäre, dass das benötigte Drehmoment durch den Verbrennungsmotor nicht mehr zu erzeugen wäre.

In diesem Fall zahlt es sich aus, dass die Aktuatoren der Trennkupplung bereits bis zu einem gewissen Grad in Richtung auf eine Offenstellung der Trennkupplung betätigt und der Ursprungsgang bereits ausgelegt wurde. Der Gangwechsel kann nahezu ebenso schnell erfolgen, als wenn eine Schaltung bei geschlossener Trennkupplung von vorne herein nicht in Erwägung gezogen worden wäre.

Im zweiten beispielhaft betrachteten Fall kommt die Entscheidungseinheit zu dem Ergebnis, dass das Fahrzeug nur geringfügig verzögert oder sogar leicht beschleunigt, da es beispielsweise auf ebener und glatter Fahrbahn bei mäßigem Rückenwind fährt und zudem stark beladen ist. Auch hier sind die Gründe für das Beschleunigungsverhalten des Fahrzeugs letztlich unerheblich. Die Entscheidungseinheit erkennt jedoch, dass die Drehzahl des Verbrennungsmotors in diesem Fall bei geschlossener Kupplung und ohne Einsatz der für derartige träge Massen nicht ausgelegten Getriebebremse problemlos sowie innerhalb einer akzeptablen Zeitspanne auf die dann voraussichtlich benötigte Synchrondrehzahl gebracht werden kann. In diesem Fall übergibt die Entscheidungseinheit einen Befehl (Ausgang "JA") zur Durchführung eines Schaltvorgangs bei geschlossener Trennkupplung an die Schaltsteuereinheit, welche die weiteren Schritte veranlasst und überwacht. Hierzu gehört beispielsweise die Einleitung der Rückstellung der Trennkupplungs-Aktuatoren, damit die Trennkupplung sofort nach Einlegend des dritten Ganges das maximale Drehmoment schlupffrei übertragen kann.

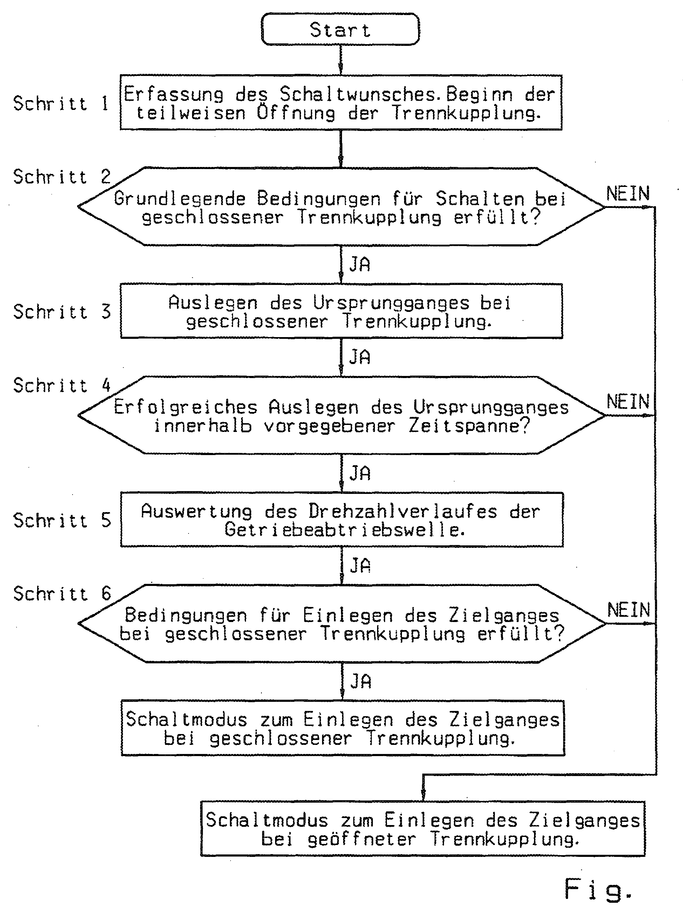

## Patentansprüche

1. Verfahren zur Durchführung eines Gangwechsels eines automatisierten Schaltgetriebes eines Fahrzeugs bei Fahrt mit oder ohne Inanspruchnahme einer Trennkupplung, wobei der Antriebsstrang des Fahrzeugs eine Antriebsmaschine, ein automatisiertes Schaltgetriebe mit mehreren festen Übersetzungsverhältnissen, eine zwischen der Antriebsmaschine und dem automatisierten Schaltgetriebe angeordnete, automatisiert schaltbare Trennkupplung und eine Schaltsteuerungseinrichtung zur Steuerung eines Wechsels des Übersetzungsverhältnisses gemäß den Vorgaben eines Fahrers und/oder einer automatisierten Gangwahleinrichtung aufweist, wobei die Schaltsteuerungseinrichtung so ausgelegt ist, dass sie nach Entscheidung einer Entscheidungseinrichtung einen Wechsel des Übersetzungsverhältnisses des automatisierten Schaltgetriebes mit oder ohne eine Öffnung der Trennkupplung durchführen kann, **dadurch gekennzeichnet, dass** die Entscheidungseinheit bei Vorlieben bestimmter, grundlegender Bedingungen ein Auslegen eines Ursprungsganges ohne Öffnung der Trennkupplung veranlasst und in der Folge Daten über die Größe sowie den Verlauf einer eng mit der Drehzahl einer Abtriebswelle des automatisierten Schaltgetriebes korrelierenden Größe einliest, und zumindest unter Einbeziehung dieser Daten über ein kupplungsloses Gangeinlegen oder ein Gangeinlegen bei geöffneter Trennkupplung entscheidet.

2. Verfahren nach Anspruch 1, **dadurch gekennzeichnet, dass** die Entscheidungseinrichtung und die Schaltsteuerungseinrichtung mit einem automatisierte Schaltgetriebe mit festen Übersetzungsstufen zusammenwirken, welches zur Schaltung unterschiedlicher Übersetzungsverhältnisse zumindest überwiegend formschlüssige Elemente verwendet.

3. Verfahren nach Anspruch 1 oder 2, **dadurch gekennzeichnet, dass** die Entscheidungseinheit bei Vorliegen der bestimmten, grundlegenden Bedingungen ein Auslegen eines Ursprungsganges ohne Öffnung der Trennkupplung veranlasst, und in der Folge überwacht, ob das Auslegen des Ursprungsganges innerhalb einer vorbestimmten Zeitspanne erfolgt, und für den Fall, dass die vorbestimmte Zeitspanne ohne das Auslegen des Ursprungsganges überschritten wird, einen Wechsel des Schaltmodus zu einer Schaltung mit Öffnung der Trennkupplung veranlasst.

4. Verfahren nach zumindest einem der vorhergehenden Ansprüche, **dadurch gekennzeichnet, dass** die Schaltsteuerungseinrichtung zu einem Zeitpunkt vor dem Treffen einer Entscheidung über den Schaltmodus damit beginnt, Aktuatoren der Trennkupplung in Richtung auf eine Offenstellung der Trennkupplung anzusteuern, und dass die Schaltsteuerungseinrichtung diese Ansteuerung vor einer Entscheidung über den Schaltmodus lediglich so weit durchführt, dass es an der Trennkupplung zu keinem Schlupf kommt.

5. Verfahren nach Anspruch 4, **dadurch gekennzeichnet, dass** die Schaltsteuerungseinrichtung die Geschwindigkeit der Bewegung der Kupplungsaktuatoren in Abhängigkeit von Grad der Lastrücknahme steuert.

6. Verfahren nach zumindest einem der vorhergehenden Ansprüche, **dadurch gekennzeichnet, dass** die Betätigungsstellung der Trennkupplung bei ausgelegtem bisherigen Gang und noch nicht eingelegtem Zielgang in Abhängigkeit von dem Vorzeichen und/oder dem Betrag der Differenz von Soll-Drehzahl und Ist-Drehzahl der Getriebeeingangswelle und/oder von dem betragsmäßigen Niveau der Getriebeeingangsdrehzahl im Zielgang und/oder vom Quotienten des Gradienten der Zieldrehzahl und dem Gradienten der Drehzahl der Abtriebswelle des Verbrennungsmotors und/oder von dem Fahrwiderstand abhängig gesteuert wird.

## Claims

1. Method for carrying out a gearshift of an automatic shift transmission of a vehicle during driving with or without the use of a separating clutch, the drivetrain of the vehicle having a drive machine, an automatic shift transmission with a plurality of fixed transmission ratios, a separating clutch which is arranged between the drive machine and the automatic shift transmission and which can be switched in an automatic fashion, and a shift control device for controlling a change of the transmission ratio according to the demands of a driver and/or of an automatic gear selection device, the shift control device being designed such that it can carry out a change of the transmission ratio of the automatic shift transmission with or without an opening of the separating clutch according to the decision of a decision device, **characterized in that**, in the presence of certain basic conditions, the decision unit initiates a disengagement of a source gear without opening the separating clutch and, as a result, reads in data regarding the value and the profile of a variable that closely correlates with the rotational speed of a drive output shaft of the automatic shift transmission, and at least taking said data into consideration makes a decision regarding a clutchless gear engagement or a gear engagement with the separating clutch open.

2. Method according to Claim 1, **characterized in that** the decision device and the shift control device interact with an automatic shift transmission which has fixed transmission stages and which uses at least predominantly positively locking elements to shift different transmission ratios.

3. Method according to Claim 1 or 2, **characterized in that**, in the presence of the certain basic conditions, the decision unit initiates a disengagement of a source gear without opening the separating clutch, and as a result, monitors whether the disengagement of the source gear takes place within a predetermined time period, and if the predetermined time period is exceeded without the disengagement of the source gear, initiates a change in the shift mode to a shift with opening of the separating clutch.

4. Method according to at least one of the preceding claims, **characterized in that**, at a time before a decision regarding the shift mode is made, the shift control device begins to activate actuators of the separating clutch in the direction of an open position of the separating clutch, and **in that** the shift control device carries out said activation before a decision regarding the shift mode only to such an extent that no slip occurs at the separating clutch.

5. Method according to Claim 4, **characterized in that** the shift control device controls the speed of the movement of the clutch actuators as a function of the degree of load reduction.

6. Method according to at least one of the preceding claims, **characterized in that** the actuating position of the separating clutch with previous gear disengaged and target gear not yet engaged is controlled as a function of the sign and/or the magnitude of the difference between nominal rotational speed and actual rotational speed of the transmission input shaft and/or as a function of the magnitude of the transmission input rotational speed in the target gear and/or as a function of the quotient of the gradient of the target rotational speed and the gradient of the rotational speed of the drive output shaft of the internal combustion engine and/or as a function of the driving resistance.

## Revendications

1. Procédé pour mettre en oeuvre un changement de vitesse d'une boîte de vitesses automatisée d'un véhicule lors de la conduite avec ou sans utilisation d'un embrayage à découplage, la chaîne cinématique du véhicule présentant un moteur d'entraînement, une boîte de vitesses automatisée avec plusieurs rapports de multiplication fixes, un embrayage à découplage commutable, automatisé, disposé entre le moteur d'entraînement et la boîte de vitesses automatisée, et un dispositif de commande de changement de vitesse pour la commande d'un changement de rapport de multiplication conformément aux ordres d'un conducteur et/ou d'un dispositif de sélection de vitesse automatisé, le dispositif de commande de changement de vitesse étant conçu de telle sorte qu'il puisse effectuer un changement de vitesse du rapport de multiplication de la boîte de vitesses automatisée avec ou sans ouverture de l'embrayage à découplage conformément à la décision d'un dispositif de décision, **caractérisé en ce que** l'unité de décision autorise une sortie de vitesse initiale sans ouverture de l'embrayage à découplage en présence de conditions de base déterminées, et lit ensuite des données relatives à la grandeur ainsi qu'à l'allure d'une grandeur étroitement associée à la vitesse de rotation d'un arbre de sortie de la boîte de vitesses automatisée, et décide, au moins en tenant compte de ces données, d'enclencher la vitesse sans l'embrayage ou d'enclencher la vitesse avec l'embrayage à découplage ouvert.

2. Procédé selon la revendication 1, **caractérisé en ce que** le dispositif de décision et le dispositif de commande de changement de vitesse coopèrent avec une boîte de vitesses automatisée avec des degrés de multiplication fixes, qui utilise des éléments au moins sensiblement à engagement positif pour le changement de vitesse de différents rapports de multiplication.

3. Procédé selon la revendication 1 ou 2, **caractérisé en ce que** l'unité de décision, en présence des conditions de base déterminées, autorise une sortie de vitesse initiale sans l'ouverture de l'embrayage à découplage, et surveille ensuite si la sortie de la vitesse initiale a lieu en l'espace d'un intervalle de temps prédéterminé, et au cas où l'intervalle de temps prédéterminé est dépassé sans que la sortie de vitesse initiale n'ait eu lieu, autorise un changement du mode de changement de vitesse à un changement de vitesse avec ouverture de l'embrayage à découplage.

4. Procédé selon au moins l'une quelconque des revendications précédentes, **caractérisé en ce que** le dispositif de commande de changement de vitesse commence à un instant avant la prise de décision concernant le mode de changement de vitesse, afin de commander des actionneurs de l'embrayage à découplage dans le sens d'une position ouverte de l'embrayage à découplage, et **en ce que** le dispositif de commande de changement de vitesse effectue cette commande avant une décision relative au mode de changement de vitesse, uniquement dans la mesure où il ne se produit pas de glissement au niveau de l'embrayage à découplage.

5. Procédé selon la revendication 4, **caractérisé en ce que** le dispositif de commande de changement de vitesse commande la vitesse du mouvement des
actionneurs d'embrayage en fonction du degré de reprise de charge.

6. Procédé selon au moins l'une quelconque des revendications précédentes, **caractérisé en ce que** la position d'actionnement de l'embrayage à découplage lors de la sortie de la vitesse précédente et lorsque la vitesse cible n'est pas encore enclenchée, est commandée en fonction du signe et/ou de la valeur absolue de la différence entre le régime de consigne et le régime actuel de l'arbre d'entrée de boîte de vitesses et/ou du niveau en valeur absolue du régime d'entrée de boîte de vitesses dans la vitesse cible et/ou du quotient du gradient de régime cible et du gradient du régime de l'arbre de sortie du moteur à combustion interne et/ou en fonction de la résistance à l'avancement.
